(19) Europäisches Patentamt
European Patent Office
Office européen des brevets

(11) Veröffentlichungsnummer: **0 340 580**
**A2**

(12) # EUROPÄISCHE PATENTANMELDUNG

(21) Anmeldenummer: **89107343.9**

(22) Anmeldetag: **24.04.89**

(51) Int. Cl.[4]: **C08L 83/04 , C08L 101/00 , C08J 3/12**

(30) Priorität: **04.05.88 DE 3815124**

(43) Veröffentlichungstag der Anmeldung: **08.11.89 Patentblatt 89/45**

(84) Benannte Vertragsstaaten: **DE FR GB IT NL**

(71) Anmelder: **BAYER AG**
**D-5090 Leverkusen 1 Bayerwerk(DE)**

(72) Erfinder: **Fuhr, Karl, Dr.**
**Kruellsdyk 55**
**D-4150 Krefeld(DE)**
Erfinder: **Müller, Friedemann, Dr.**
**Am Steinacker 5**
**D-4040 Neuss(DE)**
Erfinder: **Ott, Karl-Heinz, Dr.**
**Paul-Klee-Strasse 54**
**D-5090 Leverkusen(DE)**
Erfinder: **Schlak, Ottfried, Dr.**
**Kalkweg 2**
**D-5000 Koeln 80(DE)**
Erfinder: **Wagner, Gebhard, Dr.**
**Ackerstrasse 31**
**D-5068 Odenthal-Gloebusch(DE)**

(54) **Verwendung von Siliconharzen als Flammschutzmittel.**

(57) Gegenstand der vorliegenden Erfindung sind pulverförmige Polymermischungen aus Siliconharzen (B) und thermoplastischen Polymerisaten (A), deren Herstellung und deren Verwendung zur Modifizierung von Thermoplasten.

EP 0 340 580 A2

## Verwendung von Siliconharzen als Flammschutzmittel

In der europäischen Patentanmeldung Nr. 87 116 839.9 (Le A 24 884-EP) werden pulverförmige Polymermischungen aus partiell vernetztem, teilchenförmigem Siliconkautschuk und wenigstens einem thermoplastischen organischen Polymerisat geschützt. Diese pulverförmigen Polymermischungen werden hergestellt, indem man Dispersionen von Polymerisaten, inclusive Pfropfpolymerisaten, mit Emulsionen bzw. Dispersionen von partiell vernetzten, teilchenförmigen Siliconkautschuken mischt, koaguliert und trocknet.

Die pulverförmigen Polymermischungen werden gemäß obiger europäischen Patentanmeldung Nr. 87 116 839.9 als Zusätze zu thermoplastischen Formmassen verwendet, wodurch eine Verbesserung im Eigenschaftsbild dieser thermoplastischen Formmassen, insbesondere auch im Brandverhalten erzielt wird.

In Weiterentwicklung dieser Erfindung wurde nun überraschenderweise gefunden, daß der Einsatz von speziellen Siliconharzen anstelle von Siliconkautschuken gemäß vorstehend genannter europäischer Patentanmeldung Nr. 87 116 839.9 eine nochmalige Verbesserung im Brandverhalten bewirkt, was vor allem nach Lagerung bei 70 °C/7 Tage spürbar ist.

Gegenstand der vorliegenden Erfindung sind somit pulverförmige Polymermischungen aus Silikonharzen (B) der Summenformel (I)

$$R_x\,Si(OR')_y\,O_{\frac{4-x-y}{2}} \qquad (I)$$

worin R für einen einwertigen Kohlenwasserstoffrest steht, der gegebenenfalls selbst substituiert sein kann, insbesondere aber eine Methyl- und/oder Phenylgruppe bedeutet, worin R′ eine Alkylgruppe oder ein Wasserstoffrest ist, x einen Wert von 0,75 bis 1,75 und y einen Wert von 0,0001 bis 0,5 besitzen und worin das Siliconharz aufgebaut ist aus Einheiten der Formel $SiO_{4/2}$, $RSiO_{3/2}$, $R_2SiO_{2/2}$ und/oder $R_3SiO_{1/2}$, und aus thermoplastischen Polymerisaten (A), wobei das Gewichtsverhältnis von Siliconharz (B) zu Polymerisat (A) zwischen 0,1 Gew.-% zu 99,9 Gew.-% und 50 Gew.-% zu 50 Gew.-%, vorzugsweise zwischen 5 Gew.-% zu 95 Gew.-% und 40 Gew.-% zu 60 Gew.-% und insbesondere zwischen 8 Gew.-% zu 92 Gew.-% und 20 Gew.-% zu 80 Gew.-% liegt.

Der Anteil an Siliconharz (B) im pulverförmigen Gemisch liegt somit zwischen 0,1 Gew.-% und 50 Gew.-%, vorzugsweise zwischen 5 Gew.-% und 40 Gew.-% und insbesondere zwischen 8 Gew.-% und 20 Gew.-%, bezogen jeweils auf Gesamtgewicht an Siliconharz (B) und thermoplastischem Polymerisat (A).

Bevorzugte Siliconharze (B) der Formel (I) sind solche, in denen mindestens 80 Gew.-% aller Reste R Methyl- oder Phenylgruppen sind.

Die Herstellung der pulverförmigen Polymermischungen erfolgt dadurch, daß man

I. eine Dispersion eines organischen, thermoplastischen Polymerisats (A) mit einem mittleren Teilchendurchmesser ($d_{50}$) von 0,05 bis 30 µm, vorzugsweise von 0,05 bis 5 µm, und mit einem Feststoffgehalt von 20 Gew.-% bis 60 Gew.-%, bezogen auf Gewicht Dispersion der Komponente (A), mit einer Emulsion eines Siliconharzes (B) der Formel (I) mit einem mittleren Teilchendurchmesser ($d_{50}$) von 0,05 µm bis 3 µm, vorzugsweise von 0,1 µm bis 1 µm, und mit einem Feststoffgehalt bis zu 60 Gew.-%, vorzugsweise von 30 Gew.-% bis 50 Gew.-%, bezogen auf Gewicht Emulsion der Komponente (B), so innig und in solchem Mengenverhältnis vermischt, daß praktisch keine Agglomeration der Teilchen stattfindet, und daß Mischungen von 0,1 Gew.-% bis 50 Gew.-%, vorzugsweise mit 5 Gew.-% bis 40 Gew.-% und insbesondere mit 8 Gew.-% bis 20 Gew.-% Siliconharz (B) mit 99,9 Gew.-% bis 50 Gew.-%, vorzugsweise 95 Gew.-% bis 60 Gew.-% und insbesondere 92 Gew.-% bis 80 Gew.-% thermoplastischem Polymerisat (A), bezogen auf Gewichtssumme aus Siliconharz (B) und thermoplastischem Polymerisat (A), vorliegen,

II. die so erhaltene Mischung bei 20 °C bis 120 °C und pH-Werten von 7 bis 2, vorzugsweise von 5 bis 3, unter Bildung einer feinteiligen Mischung der Komponenten (A) und (B) in bekannter Weise koaguliert und

III. nach Isolierung dieses Koagulats bei Temperaturen von 50 °C bis 150 °C, insbesondere von 80 °C bis 120 °C in bekannter Weise trocknet.

Gegenstand der vorliegenden Erfindung ist somit auch ein Verfahren zur Herstellung der erfindungsgemäßen pulverförmigen Polymermischungen, das dadurch gekennzeichnet ist, daß man diese gemäß den Schritten I, II und III, wie vorstehend beschrieben, herstellt.

Eine bevorzugte Herstellung arbeitet mit wäßrigen Dispersionen der Komponente (A).

Besonders bevorzugt wird ein Gemisch von Dispersionen der Komponente (A) eingesetzt, worin 20 bis 80 Gew.-% feinteiliges Polymerisat (mittlerer Teilchendurchmesser $d_{50}$ = 0,05 bis 0,15 µm) und 80 bis 20 Gew.-% grobteiliges Polymerisat (mittlerer Teilchendurchmesser $d_{50}$ = 0,20 bis 0,8 µm, insbesondere 0,25 bis 0,5 µm) enthalten sind.

In den Dispersionen der Komponente (A) sind Polymerisat-Teilchen in unvernetzter, teilvernetzter oder hochvernetzter Form enthalten. Als Dispergiermedium können Wasser oder organische Lösungsmittel wie Ester, Kohlenwasserstoffe, Halogenkohlenwasserstoffe, Alkohole oder deren Gemische fungieren. Bevorzugtes Medium ist Wasser. Solche Dispersionen sind bekannt, z.B. aus EP-A 28 344 und DE-AS 20 47 427. Es handelt sich um übliche Polymerisatdispersionen, die durch Emulsionspolymerisation oder durch Dispergierung eines fertigen Polymeren erhalten werden können.

Die erfindungsgemäß geeigneten Dispersionen der Komponente (A) enthalten vorzugsweise thermoplastische Homo-oder Copolymerisate aus olefinisch ungesättigten Monomeren wie Styrol, α-Methylstyrol, p-Methylstyrol, Halogenstyrol, Acrylnitril, Methacrylnitril, Alkylacrylat, Alkylmethacrylat, Maleinsäureanhydrid, N-subst. Maleinimid, Vinylacetat, Vinylchlorid, Vinylidenchlorid, Vinylidenfluorid und/oder thermoplastische Pfropfpolymerisate dieser Monomeren auf Kautschuke mit Glasübergangstemperaturen kleiner als 0 °C, vorzugsweise kleiner als -10 °C, wobei die Pfropfpolymerisate 8 bis 80 Gew.-% Kautschuk enthalten.

Als Polymerisate für Dispersionen der Komponente (A) sind besonders geeignet: Homopolymere des Styrols, Methylmethacrylats und Vinylchlorids, deren Copolymerisate mit wenigstens einem der Monomeren Acrylnitril, Methacrylnitril, N-substituiertes Maleinimid (insbesondere N-Phenylmaleinimid oder N-Cyclohexylmaleinimid), Alkylmethacrylat oder Alkylacrylat sowie Pfropfpolymerisate z.B. aus Polybutadien, Polychloropren oder Styrol-Butadien- bzw. Acrylnitril-Butadien-Copolymerkautschuken mit Gelgehalten (gemessen bei 20 °C) größer als 30 Gew.-%, aus Alkylacrylatkautschuken, EPDM-Kautschuken (Ethylen-Propylen-Dien-Monomer-Kautschuken) oder aus Siliconkautschuken, die mit Styrol, α-Methylstyrol, Acrylnitril, Methylmethacrylat, Vinylchlorid, Vinylacetat oder Mischungen daraus bepfropft sind.

Die erfindungsgemäß geeigneten Emulsionen der Siliconharze (B) enthalten bevorzugt Wasser als Dispergiermedium.

Die Herstellung der Siliconharze der Formel (I) ist bekannt. Für ihre Weiterverarbeitung zu Emulsionen können diese Siliconharze hundertprozentig oder in Form von Lösungen in geeigneten organischen Lösemitteln eingesetzt werden. Zweckmäßigerweise sollten Siliconharzlösungen nicht mehr als 60 % Lösungsmittel enthalten, da dieses später wieder abgedampft werden muß.

Die Herstellung von Siliconharzemulsionen ist ebenfalls bekannt und beispielsweise in der DE-OS 3 200 709 beschrieben. Die Siliconharzemulsionen sind teilchenförmig und besitzen, wie bereits erwähnt, mittlere Teilchengrößen ($d_{50}$-Werte) von 0,05 bis 3 µm, insbesondere 0,1 bis 1 µm.

Die innige Abmischung der Dispersion von Komponente (A) mit der Emulsion von Komponente (B) unter Vermeidung von Agglomeration erfolgt beispielsweise dadurch, daß sowohl die Dispersion der Komponente (A) wie auch die Emulsion der Komponente (B) im gewünschten und erfindungsgemäßen Mengenverhältnis gemeinsam intensiv verrührt werden und sich gegebenenfalls ein Durchmischen mit einer Emulgiermaschine anschließt. Nach dem gründlichen Verteilen wer den 1,8 Gew.-%, bezogen auf den Polymer-Feststoff, an phenolischen Antioxidantien als wäßrige Dispersion zugesetzt und eingemischt.

Die Koagulierung der Mischung aus Dispersion von Komponente (A) und Emulsion von Komponente (B) erfolgt beispielsweise dadurch, daß die Mischung aus der Dispersion der Komponente (A) und der Emulsion der Komponente (B) in dünnem Strahl in eine je 1 %ige wäßrige Lösung aus Magnesiumsulfat und Essigsäure unter Rühren gegeben wird. Die Temperatur der Fällösung beträgt dabei 80-90 °C.

Die Isolierung der koagulierten Mischung erfolgt beispielsweise durch Abfiltrieren oder Zentrifugieren und mehrmaliges Auswaschen mit destilliertem Wasser bis zur Elektrolytfreiheit des Waschwassers.

Die Trocknung der koagulierten Mischung erfolgt beispielsweise im Vakuumtrockenschrank bei 100 °C bis zur Gewichtskonstanz zu einem weißen Pulver.

Die erfindungsgemäßen pulverförmigen Polymermischungen sind als Flammschutzmittel für Thermoplasten geeignet. Sie werden hierbei in solchen Mengen eingesetzt, daß der Gehalt an Siliconharz (B) in der flammwidrigen thermoplatischen Formmasse maximal 5 Gew.-%, vorzugsweise 4 Gew.-% bis 0,25 Gew.-%, insbesondere 2,5 Gew.-% bis 0,5 Gew.-%, bezogen auf Gesamtgewicht an flammwidriger, thermoplastischer Formmasse, beträgt.

Gegenstand der vorliegenden Erfindung ist somit außerdem die Verwendung der erfindungsgemäßen, pulverförmigen Polymermischungen als Flammschutzmittel für Thermoplasten in Mengen von maximal 5 Gew.-%, vorzugsweise von 4 Gew.-% bis 0,25 Gew.-% und insbesondere von 2,5 Gew.-% bis 0,5 Gew.-%, bezogen auf Gesamtgewicht an flammwidriger, thermoplastischer Formmasse, an Siliconharz (B).

Geeignete Thermoplasten, die mit den erfindungsgemäßen, pulverförmigen Polymermischungen flammwidrig ausgerüstet werden können, sind zum einen die vorstehend genannten thermoplastischen Polymerisate, die zur Herstellung der erfindungsgemäßen, pulverförmigen Polymermischungen geeignet sind.

Hierbei seien insbesondere ABS, Polystyrol, schlagzähmodifiziertes Polystyrol und PVC genannt.

Zum anderen sind außerdem thermoplastische Polycarbonate, thermoplastische Polyamide, thermoplastische aliphatische Polyester, wie beispielsweise Polyalkylenterephthalate, thermoplastische aromatische Polyester, wie Bisphenol-A-Terephthalate, aromatische thermoplastische Polyarylsulfone, thermoplastische Polyphenylenether und thermoplastische Polyphenylensulfide geeignete, flammwidrig auszurüstende Thermoplasten.

Die Thermoplasten können allein oder als Mischungen verschiedener Thermoplasten, also als Legierungen, mit den erfindungsgemäßen, pulverförmigen Polymermischungen flammwidrig ausgerüstet werden.

Besonders geeignete, erfindungsgemäß flammwidrig auszurüstende Thermoplasten sind ABS, thermoplastisches Bisphenol-A-Polycarbonat, thermoplastisches Polycapronamid, Polyhexamethylendiaminoadipinsäureamid, Polyethylenterephthalat und Polybutylenterephthalat sowie Mischungen dieser besonders geeigneten Thermoplasten.

Die Einarbeitung der erfindungsgemäßen, pulverförmigen Polymermischungen in die Thermoplasten erfolgt durch Schmelzcompoundierung der Thermoplasten als Granulate oder als Pulver mit den erfindungsgemäßen, pulverförmigen Polymermischungen, im Temperaturbereich von 200 °C bis 300 °C in üblichen Mischern wie Knetern, Extrudern, Walzen und Schnecken.

Gegenstand der vorliegenden Erfindung ist somit auch ein Verfahren zum Einarbeiten der erfindungsgemäßen, pulverförmigen Polymermischungen in Thermoplaste, das dadurch gekennzeichnet ist, daß man die Thermoplaste mit den erfindungsgemäßen, pulverförmigen Polymermischungen in üblichen Mischern im Temperaturbereich von 200 °C bis 300 °C schmelzcompoundiert.

Gegenstand der vorliegenden Erfindung sind außerdem Mischungen von Thermoplasten mit den erfindungsgemäßen, pulverförmigen Polymermischungen.

Durch die Verwendung der erfindungsgemäßen, pulverförmigen Polymermischungen als Zusätze zu Thermoplasten werden nicht nur die Flammwidrigkeit der Thermoplasten, sondern auch verschiedene andere Eigenschaften der Thermoplasten verbessert, und zwar deren Schlagzähigkeit, Wärmeformbeständigkeit und Entformungsverhalten.

Andererseits führt der Zusatz der erfindungsgemäßen, pulverförmigen Polymermischungen zu den Thermoplasten zu keiner negativen Beeinträchtigung der Oberflächeneigenschaften der Thermoplasten, die Überlackierbarkeit von Formkörpern aus den Thermoplasten wird durch die eingearbeiteten erfindungsgemäßen, pulverförmigen Polymermischungen nicht gestört.

Es war zwar bereits bekannt, Polysiloxane zur Verminderung der Abtropfneigung von flammwidrigen Polycarbonaten (DE-OS 25 35 261) und von flammwidrigen Polycarbonat-Legierungen (DE-OS 29 18 882 und EP-OS 00 19 127) einzusetzen, der Gegenstand der vorliegenden Erfindung, nämlich die pulverförmigen Polymermischungen und ihre Verwendung als Flammschutzmittel, waren daraus jedoch nicht ableitbar.

Den Thermoplasten können vor, während oder nach der erfindungsgemäßen Einarbeitung der erfindungsgemäßen, pulverförmigen Polymermischungen zusätzlich noch die für die jeweiligen Thermoplasten üblichen Zusätze, wie Stabilisatoren, Pigmente, Fließmittel, Antistatika, Entformungsmittel und/oder andere Flammschutzmittel eingearbeitet werden.

Andere Flammschutzmittel, als die erfindungsgemäß geeigneten, pulverförmigen Polymermischungen, sind solche, die für die jeweiligen Thermoplasten üblich sind, also etwa Metallsalze, Halogenverbindungen oder Phosphorverbindungen. Derartige, andere Flammschutzmittel können in bekannter Weise nicht nur als Additive den Thermoplasten zugesetzt werden, sondern, wie etwa im Falle des Halogens, durch die Mitverwendung geeigneter halogen haltiger Reaktanten in die Synthese der jeweiligen Thermoplasten einbezogen werden.

Obwohl der Zusatz der erfindungsgemäßen pulverförmigen Polymermischungen die Entformbarkeit der Thermoplasten verbessert, kann diese noch durch den Zusatz von für die jeweiligen Thermoplasten üblichen Entformungsmittel gesteigert werden.

Derartige Entformungsmittel sind beispielsweise Fettsäureester von langkettigen Monoalkoholen, wie Stearylalkohol, von dreiwertigen Alkoholen, wie Glycerin oder Trimethylolpropan, von vierwertigen Alkoholen, wie Pentaerythrit, oder von sechswertigen Alkoholen, wie etwa Sorbit.

Gegenstand der vorliegenden Erfindung ist somit auch ein Verfahren zum zusätzlichen Einarbeiten von Stabilisatoren, Pigmenten, Fließmitteln, Antistatika, Entformungsmitteln und/oder anderen Flammschutzmitteln in die Thermoplaste, das dadurch gekennzeichnet ist, daß man vor, während oder nach der Einarbeitung der erfindungsgemäßen, pulverförmigen Polymermischungen außerdem noch Stabilisatoren, Pigmente, Fließmittel, Antistatika, Entformungsmittel und/oder andere Flammschutzmittel den Thermoplasten zumischt.

Gegenstand der vorliegenden Erfindung sind außerdem Mischungen von Thermoplasten mit den

erfindungsgemäßen, pulverförmigen Polymermischungen und zusätzlich mit Stabilisatoren, Pigmenten, Fließmitteln, Antistatika, Entformungsmitteln und/oder anderen Flammschutzmitteln.

Die Thermoplasten, denen die erfindungsgemäßen pulverförmigen Polymermischungen und gegebenenfalls die vorstehend genannten Stabilisatoren, Pigmente, Fließmittel, Antistatika, Entformungsmittel und/oder anderen Flammschutzmittel eingearbeitet sind, können zu Formkörpern nach den üblichen Methoden der Thermoplastenverarbeitung wie Granulieren, Spritzguß, Extrusion, Kalandrieren, Pressen und Blasverformen verarbeitet werden.

Derartige Formkörper sind einsetzbar beispielsweise als Kunststoffteile im Automobil-, Bau- und Elektrosektor sowie für Haushaltsgeräte.

## Beispiele

A) Herstellung einer Polymerdispersion der Komponente (A).

Dispersion eines ABS-Pfropfpolymerisats von 50 Gew.-% Styrol-Acrylnitril-Gemisch (im Verhältnis von 72:28) auf 50 Gew.-% teilchenförmigem Polybutadien mit einem mittleren Teilchendurchmesser ($d_{50}$) von 0,4 $\mu$m, erhalten durch Emulsionspolymerisation. Die Dispersion hat einen Feststoffgehalt von 30 Gew.-%.

B) Herstellung einer Siliconharzemulsion der Komponente (B) gemäß Summenformel (I), worin X = 1,25 ist.

Es wird eine Siliconharzemulsion, wobei das Siliconharz aus 70 Mol-% $MeSiO_{3/2}$, 15 Mol-% $Me_2SiO_{2/2}$, 10 Mol-% $PhSiO_{3/2}$ und 5 Mol-% $Me_3SiO_{1/2}$-Einheiten besteht, 1 % Hydroxylgruppen enthält und mit gleichen Teilen Toluol verdünnt ist, hergestellt.

Dazu werden in einem Rührwerkskessel 38,8 kg entionisiertes Wasser vorgelegt und auf 60 °C erwärmt; danach werden unter Rühren 1,2 kg eines Emulgatorgemisches mit einem HLB-Wert von ca. 15 (Oleylalkohol mit 2 Ethylenoxideinheiten und Polyoxyethylen-triglycerid) hinzugefügt; nach 10 Minuten Rühren werden 60 kg der obigen Harzlösung während 2 Stunden zudosiert und 30 Minuten nachgerührt; anschließend wird die Emulsion 3 x mit Hilfe einer Hochdruckemulgiermaschine homogenisiert. Es resultiert eine Emulsion, welche eine mittlere Teilchengröße von 0,8 $\mu$m aufweist, länger als 3 Monate lagerstabil ist und einen Festkörpergehalt von 30,5 Gew.-% besitzt.

C) Herstellung einer Emulsion des Siliconkautschuks gemäß europäischer Patentanmeldung Nr. 87 116 839.9 (Le A 24 884-EP) = Beispiel 1 aus dieser europäischen Patentanmeldung, das im vorliegenden Zusammenhang zu Vergleichszwecken aufgenommen ist.

38,4 Gew.-Teile Octamethylcyclotetrasiloxan, 1,2 Gew.-Teile Tetramethyltetravinylcyclotetrasiloxan und 1 Gew.-Teil $\gamma$-Mercaptopropylmethyldimethoxysilan werden miteinander verrührt. 0,5 Gew.-Teile Dodecylbenzolsulfonsäure in 58,4 Gew.-Teilen Wasser werden anschließend innerhalb 1 Stunde zugegeben. Dabei wird intensiv gerührt. Die Voremulsion wird mit Hilfe einer Hochdruckemulgiermaschine 2 mal bei 200 bar homogenisiert. Man gibt weitere 0,5 Gew.-Teile Dodecylbenzolsulfonsäure hinzu.

Die Emulsion wird 2 h bei 85 °C und anschließend 36 h bei Raumtemperatur gerührt. Neutralisiert wird mit Hilfe von 5 n-NaOH. Es resultiert eine stabile Emulsion mit einem Feststoffgehalt von ca. 36 %. Das Polymer besitzt einen Gelgehalt von 82 Gew.-%, gemessen in Toluol, die mittlere Teilchengröße ($d_{50}$) beträgt 0,3 $\mu$m.

Der Siliconkautschuk dieser Emulsion hat gemäß Summenformel (I) einen X-Wert von 2.

## Beispiel 1

Herstellung einer pulverförmigen, erfindungsgemäßen Polymermischung aus der Siliconharzemulsion aus Beispiel B) und der thermoplastischen Polymerdispersion aus Beispiel A).

Die Polymerdispersion aus Beispiel A) wird mit der Siliconharzemulsion aus Beispiel B) so abgemischt, daß in der Mischung 90 Gew.-% (A) und 10 Gew.-% (B), bezogen jeweils auf Feststoff, vorliegen. Die Mischung wird mittels 1,8 Gew.-%, bezogen auf Polymerfeststoff, phenolischer Antioxidanzien stabilisiert

und gut verrührt. Bei 85 bis 95° C wird die Mischung mit einer wäßrigen Lösung von $MgSO_4$ (Bittersalz) und Essigsäure bei pH-Werten von 4 koaguliert, filtriert und elektrolytfrei gewaschen. Danach wird bei 100° C zu einem Pulver getrocknet.

Dieses Pulver kann mit anderen Thermoplasten compoundiert werden.

Vergleichsbeispiel (entspricht Beispiel 2 der europäischen Patentanmeldung Nr. 87 116 839.9 (Le A 24 884-EP)).

Die Herstellung der pulverförmigen Polymermischung erfolgt gemäß obigem Beispiel 1, wobei jedoch anstelle der Siliconharzemulsion aus Beispiel B) die Siliconkautschukemulsion aus Beispiel C) eingesetzt wird, und wobei der Silicongehalt 10 Gew.-% beträgt.

Das erhaltene Pulver kann mit anderen Thermoplasten compoundiert werden.

Beispiel 2 und Vergleichsversuche 1 und 2

Komponenten, Herstellung und Prüfung der Formmassen.

Verwendete Materialien:

I. Aromatisches Polycarbonat aus 10 Gew.-% Tetrabrombisphenol A und 90 Gew.-% Bisphenol A mit relativer Viskosität, gemessen in $CH_2Cl_2$ bei 25° C, von 1,284 (0,5 gew.-%ige Lösung).

II. Thermoplastisches Polymerisat aus Styrol und Acrylnitril mit einem Acrylnitrilgehalt von 23 Gew.-% und einem mittleren Molekulargewicht von 60 000.

III. ABS-Propfpolymerisat von 50 Gew.-% Styrol-Acrylnitril-Gemisch (im Gew.-Verhältnis von 72:28) auf 50 Gew.-% teilchenförmigem Polybutadien eines mittleren Teilchendurchmessers ($d_{50}$) von 0,4 µm, erhalten durch Emulsionspolymerisation.

IV. Siliconharz enthaltendes Polymerisat des Beispiels 1.

IVa. Siliconkautschuk enthaltendes Polymerisat des Vergleichsbeispiels.

V. Triphenylphosphat (TPP).

VI. Pentaerythrittetrastearat (PETS).

Herstellung und Prüfung der Formmassen

Die Herstellung erfolgt durch direkte Compoundierung der in Tabelle 1 aufgelisteten Komponenten und zwar auf einem Banbury-Innenkneter (Fa. Pomini-Farell) vom Typ Br (1,2 l) oder Typ OOC (3 l) bei 230 bis 240° C. Eine Granulierung schließt sich an.

Tabelle 1

| Komponente Mengen in Gew.-% | I | II | III | IV | IVa | V | VI |
|---|---|---|---|---|---|---|---|
| Vergleichsversuch 1 | 58,0 | 17,5 | 13,7 | - | - | 9,9 | 0,9 |
| Beispiel 2 | 58,0 | 17,5 | 3,7 | 10 | - | 9,9 | 0,9 |
| Vergleichsversuch 2 (= Beispiel 4 der europäischen Patentanmeldung Nr. 87 116 839.9) | 58,0 | 17,5 | 3,7 | - | 10 | 9,9 | 0,9 |

Die erhaltenen Formmassen werden bei 260° C spritzgegossen (Aggregat: Werner-Pfleiderer-Schnecke DKS 275, Schließkraft 275 MP, Schneckendurchmesser 56 mm, Länge L/D-23/l) und folgenden Tests unterzogen:

- Schlagzähigkeit nach DIN 53 543 ($a_n$)
- Kerbschlagzähigkeit nach DIN 53 543 ($a_k$)
- Brandtest nach Vorschrift Underwriters' Laboratories, S. 94 (UL 94)

| Tabelle 2 zeigt die erhaltenen Prüfdaten | | | | |
|---|---|---|---|---|
| | $a_n$ | $a_k$ | UL 94/1,6 mm-Stab Probenlagerung | |
| | (kJ/m²) | (kJ/m²) | Normklima | 70° C/7 Tage |
| Vergleichsversuch 1 | n.g.* | 14 | V-2 | V-2 |
| Beispiel 2 | n.g. | 14 | V-0 | V-0 |
| Vergleichsversuch 2 | n.g. | 13 | V-0 | V-1 |

* n.g. Prüfkörper nicht gebrochen

## Ansprüche

1. Pulverförmige Polymermischungen aus Siliconharzen (B) der Summenformel (I)

$$R_x\,Si(OR')_y\,O_{\frac{4-x-y}{2}} \qquad (I)$$

worin R für einen einwertigen Kohlenwasserstoffrest steht, der gegebenenfalls selbst substituiert sein kann, worin R′ eine Alkylgruppe oder ein Wasserstoffrest ist, x einen Wert von 0,75 bis 1,75 und y einen Wert von 0,0001 bis 0,5 besitzen und worin das Siliconharz aufgebaut ist aus Einheiten der Formel $SiO_{4/2}$, $RSiO_{3/2}$, $R_2SiO_{2/2}$ und/oder $R_3SiO_{1/2}$, und aus thermoplastischen Polymerisaten (A), wobei das Gewichtsverhältnis von Siliconharz (B) zu Polymerisat (A) zwischen 0,1 Gew.-% zu 99,9 Gew.-% und 50 Gew.-% zu 50 Gew.-% liegt.

2. Polymermischungen gemäß Anspruch 1, dadurch gekennzeichnet, daß das Gewichtsverhältnis von Siliconharz (B) zu thermoplastischem Polymerisat (A) zwischen 5 Gew.-% zu 95 Gew.-% und 40 Gew.-% zu 60 Gew.-% liegt.

3. Polymermischungen gemäß Anspruch 2, dadurch gekennzeichnet, daß das Gewichtsverhältnis von Siliconharz (B) zu thermoplastischem Polymerisat (A) zwischen 8 Gew.-% zu 92 Gew.-% und 20 Gew.-% zu 80 Gew.-% liegt.

4. Verfahren zur Herstellung der pulverförmigen Polymermischungen der Ansprüche 1 bis 3, dadurch gekennzeichnet, daß man

I. eine Dispersion eines organischen thermoplastischen Polymerisats (A) mit einem mittleren Teilchendurchmesser ($d_{50}$) von 0,05 bis 30 µm und mit einem Feststoffgehalt von 20 Gew.-% bis 60 Gew.-%, bezogen auf Gewicht Dispersion der Komponente (A), mit einer Emulsion eines Siliconharzes (B) der Formel (I) des Anspruchs 1 mit einem mittleren Teilchendurchmesser ($d_{50}$) von 0,05 bis 3 µm und mit einem Feststoffgehalt bis zu 60 Gew.-%, bezogen auf Gewicht Emulsion der Komponente (B), so innig und in solchem Mengenverhältnis vermischt, daß praktisch keine Agglomeration der Teilchen stattfindet, und daß Mischungen von 0,1 Gew.-% bis 50 Gew.-% Siliconharz (B) mit 99,9 Gew.-% bis 50 Gew.-% thermoplastischem Polymerisat (A), bezogen auf Gewichtssumme aus Siliconharz (B) und thermoplastischem Polymerisat (A), vorliegen,

II. die so erhaltene Mischung bei 20° C bis 150° C und pH-Werten von 7 bis 2 unter Bildung einer feinteiligen Mischung der Komponenten (A) und (B) in bekannter Weise koaguliert und

III. nach Isolierung dieses Koagulats bei Temperaturen von 50° C bis 150° C in bekannter Weise trocknet.

5. Verwendung der pulverförmigen Polymermischungen der Ansprüche 1 bis 3 als Flammschutzmittel für Thermoplasten in Mengen von maximal 5 Gew.-%, bezogen auf Gesamtgewicht an flammwidriger, thermoplastischer Formmasse, an Siliconharz (B).

6. Verfahren zum Einarbeiten der Polymermischungen der Ansprüche 1 bis 3 in Thermoplaste, dadurch gekennzeichnet, daß man die Thermoplaste mit den Polymermischungen der Ansprüche 1 bis 3 in üblichen Mischern im Temperaturbereich von 200° C bis 300° C schmelzcompoundiert.

7. Verfahren gemäß Anspruch 6, dadurch gekennzeichnet, daß man vor, während oder nach der Einarbeitung der Polymermischungen der Ansprüche 1 bis 3 außerdem noch Stabilisatoren, Pigmente, Fließmittel, Antistatika, Entformungsmittel und/oder andere Flammschutzmittel den Thermoplasten zumischt.

8. Mischungen aus Thermoplasten und den Polymermischungen der Ansprüche 1 bis 3.

9. Mischungen gemäß Anspruch 8, enthaltend zusätzlich Stabilisatoren, Pigmente, Fließmittel, Antistatika, Entformungsmittel und/oder andere Flammschutzmittel.